# EUROPEAN PATENT APPLICATION

(11) **EP 2 305 961 A2**
(43) Date of publication of application: **06.04.2011**
(21) Application number: 10174256.7
(22) Date of filing: 27.08.2010
(51) Int. Cl.: F01D 21/04, F01D 25/24

(54) **Impactor containment**

(30) Priority: 01.10.2009 GB 0917149
(71) Applicant: Rolls-Royce plc, London SW1E 6AT (GB)
(72) Inventor: McMillan, Alison, Uttoxeter, Staffordshire ST14 7BY (GB)
(74) Representative: Gee, Philip David

(57) **Abstract**

An impactor containment system including a laminate material, the laminate material comprising a face sheet (1), a cellular filling providing a crushable layer (2) one side of which layer is arranged on the face sheet (1), and a stiff backing layer (3) arranged on other side of the crushable layer (2), wherein the face sheet (1) is provided with zones of weakness (1a).

## Description

This invention relates to impactor containment; particularly, but not exclusively, the invention relates to impactor containment systems for gas turbine engines.

For example, the casings of gas turbine engines are designed to absorb energy from impactors, such as blades or other components which may fail under extreme loads and be released from the spinning blade assemblies within the engine. Such casings thus incorporate containment systems designed to catch or deflect released components. Further, under normal use the containment systems also have to resist impacts from ice and smaller particles sucked through the engine intake.

One example of a containment system simply involves a casing formed from solid ductile material. However, such a casing has the disadvantage of being heavy and requiring a relatively large thickness to be effective.

In EP 12457891 A2 there is proposed a containment system for gas turbine engines which employs a double layer honeycomb containment structure having internal ribs. This may mitigate for example the weight problem of solid ductile material but internal ribs pose a major manufacturing difficulty. The ribs have to be machined, which means a larger original forging, plus machining work. Also the honeycomb needs to be cut into strips to be laid between the ribs, which has also proved to be difficult. Thus, this proposal involves significant cost, material utilisation and manufacturing time, with perhaps only a modest weight reduction.

According to the present invention there is provided an impactor containment system including a laminate material, the laminate material comprising a face sheet, a cellular filling providing a crushable layer one side of which layer is arranged on the face sheet, and a stiff backing layer arranged on other side of the crushable layer, wherein the face sheet is provided with zones of weakness.

In embodiments of the present invention there may be stacked on the face sheet one or more further layer structures each comprising a further cellular filling providing a further crushable layer, proximate the face sheet, and arranged on the further crushable layer away from the face sheet, a further face sheet also provided with zones of weakness.

In embodiments of the present invention zones of weakness provided in the or a face sheet may be constituted for example by perforations and/or cuts and/or interruptions and/or dimpling and/or tiling in or of the face sheet concerned.

The present invention allows or provides for, in effect, deliberate failure of a component (a face sheet) of the laminate containment system structure.

The inventor has had the insight that this entirely counter-intuitive measure is in fact advantageous. The inventor has had the insight that the difficulty is not the failure of localised material, but in the way in which a sandwich or laminate structure behaves when it delaminates. The inventor has had the insight that in a system using a multiple decker (multiple layer) sandwich, it is possible for the front of the impactor to penetrate completely through the impact-proximate first full layer (face sheet, cellular filling material, and next face sheet), or even more full layers in some cases, in such a way that these upper (impact proximate) three layers behave in effect like a single deck or layer. This single deck or layer is structurally stiff (stiffness goes as thickness to the third power and is dominated by the face sheet material properties rather than the softer filler material). This stiff structure resists an impactor (e.g. a blade fragment or ice block), so that as the impactor moves forwards through the containment system it is forced down under the upper sandwich(es), i.e. the impact proximate sandwich(es). The impactor then acts as a wedge in the space between an outer casing member (i.e. an impact remote casing or containment system member) and the upper - impact proximate - sandwich layer(s), and because the upper - impact proximate - layers behave stiffly, the impactor is actually driven into the outer casing (the impact remote casing member). This is an unanticipated effect which is undesirable. The inventor has further realized that this effect can be avoided or at least mitigated by the present invention.

It is generally known that to make perforations in a sheet or layer, or other weakenings, will reduce strength, and therefore render the sheet or layer less able to withstand an impact event. Despite this, the inventor has realized that providing weakenings in a sheet or layer of a laminated layer containment structure can in fact increase ability to withstand an impact event. This is an entirely surprising effect.

Reference is made by way of example to the accompanying drawings, in which:-
Figure 1 shows a schematic cross-sectional view of a gas turbine engine;
Figure 2 shows a schematic cross-sectional view of a containment system in accordance with an embodiment of the present invention;
Figure 3 shows schematic plan views of abutting tiled face sheet structures which may be used in containment systems in accordance with embodiments of the present invention; and
Figure 4 shows schematic plan views of other face sheet structures which may be used in containment systems in accordance with an embodiment of the present invention.

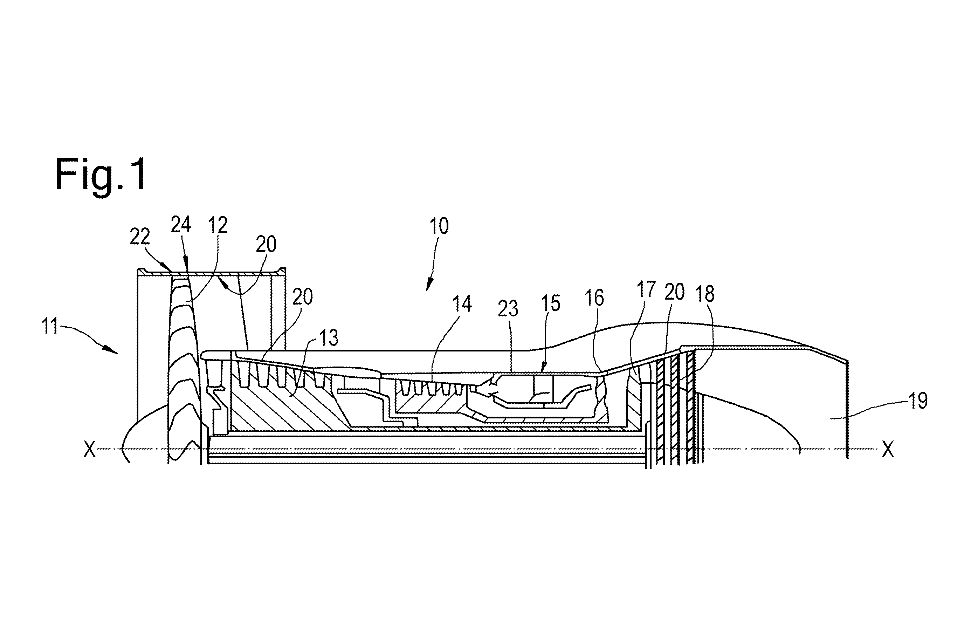

Referring to Figure 1, a gas turbine engine is generally indicated at 10 and comprises, in axial flow series in its gas path, an air intake 11, a propulsive fan 12, an intermediate pressure compressor 13, a high pressure compressor 14, a combustor 15, a turbine arrangement comprising a high pressure turbine 16, and intermediate pressure turbine 17 and a low pressure turbine 18, and an exhaust nozzle 19.

The gas turbine engine 10 for an aircraft operates in a conventional manner so that air entering the intake 11 is accelerated by the fan 12 which produces two air flows: a first air flow into the intermediate pressure compressor 13 and a second air flow which provides propulsive thrust. The intermediate pressure compressor 13 compresses the air flow directed into it before delivering that air to the high pressure compressor 14 where further compression takes place.

The compressed air exhausted from the high pressure compressor 14 is directed into the combustor 15 where it is mixed with fuel and the mixture combusted. The resultant hot combustion products then expand through, and thereby drive, the high, intermediate and low pressure turbines 16, 17 and 18 before being exhausted through the nozzle 19 to provide additional propulsive thrust. The high, intermediate and low pressure turbines 16, 17 and 18 respectively drive the high and intermediate pressure compressors 14 and 13 and the fan 12 by suitable interconnecting shafts. The fan 12, the compressors 13,14 and the turbines, 16, 17, 18 are surrounded by casings designated generally by the numeral 20.

It is a certification requirement of gas turbine engines that, should components such as fan blades, compressor blades, turbine blades or pieces thereof become detached from other parts of the assemblies, these pieces must be contained. Should this happen the high energy of the blade or blade piece would cause it to strike the inside of the casing 20 of the gas turbine engine 10.

It is thus necessary to ensure that the energy of the blades is absorbed by the casing 20 and hence the casing 20 comprises a containment system 22 which in accordance with an embodiment of the invention has a containment structure 24 (not shown in detail in Figure 1), in this case for the fan 12. Other parts of the casing, e.g. around compressor, turbine etc. may have similar containment systems (not shown in Figure 1). As seen in Figure 1, the casing 20 is generally cylindrical, or frusto-conical, and is arrange substantially coaxially around the fan 12, the compressors 13, 14 or the turbines 16, 17 and 18.

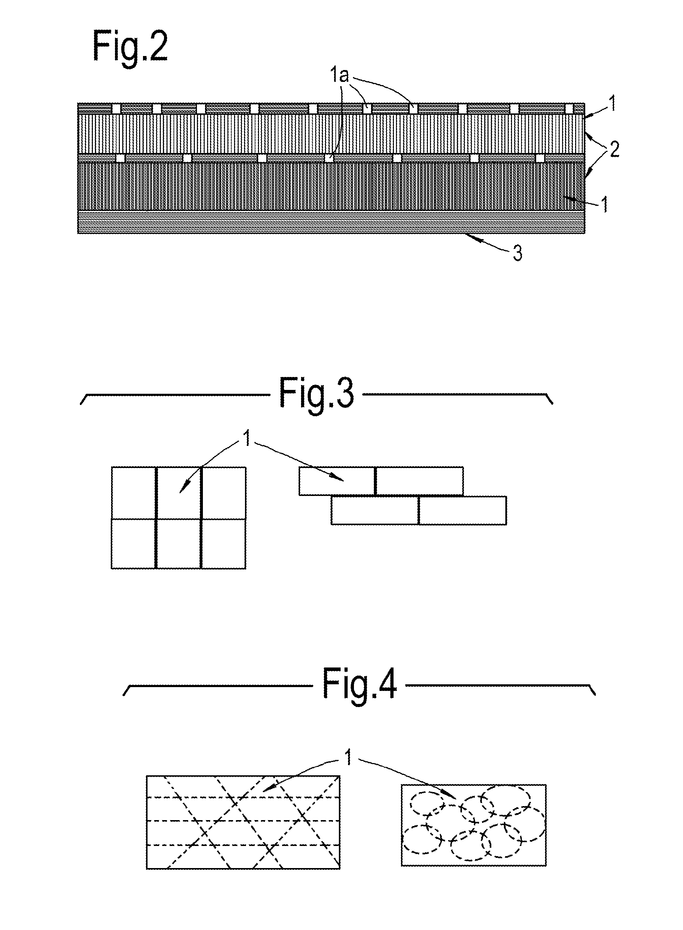

An embodiment of a containment structure in accordance with the invention is schematically illustrated in a cross-sectional view in Figure 2. As indicated above the structure is arranged substantially coaxially around the fan 12, the compressors 13, 14 or the turbines 16, 17 and 18. Uppermost in Figure 2 is most proximate to the fan etc. and hence most impact-proximate.

In the illustrated example the structure comprises a laminate of face sheets or septum layers 1, cellular fillings providing crushable sandwich layers 2, and a stiff backing layer 3.

The face sheets or septum layers 1 are provided with deliberate weakenings such as perforations 1a shown in Figure 2. The distributions and/or spacings and/or sizes of the perforations in the upper (impact proximate) and lower face sheets 1 in Figure 2 may be different, for example as indicated.

The perforations 1a at each face sheet or septum layer 1 contribute to a weakening of the sandwich or laminate structure under bending. This means an impactor is freer to travel through or within the containment structure (rather than being driven down into it, with a risk of breaching the containment structure).

The lines of perforation on the upper (impact proximate) surface may be across the line of expected ice impact and some may line up with the expected angle of blade impact.

The choice of weakening features, such as perforations 1a, in each face sheet or septum layer 1 may be made to optimise between trapping the impactor within the containment region provided by the containment structure, or ejecting it back into the gas path of the engine, where it can lose energy by bouncing around and impacting several times.

Apart from perforations, other weaknesses or stress raisers may be provided in the face sheets or septum layers 1. For example the face sheets or septum layers 1 may be constituted of strips or tiles of face sheet or septum layer material for example as schematically illustrated in Figure 3, in which abutting tiles of face sheet material are provided. The abutting regions of the tiles represent weakenings or stress raisers. Apart from the tile arrangements illustrated on the left and right in Figure 3, many other tile arrangements, regular or non-regular are possible in accordance with embodiments of the invention.

Further, other weaknesses or stress raisers may be provided in the face sheets or septum layers 1 by cut lines in any direction, or even in curves, such as ovals, geodesic curves etc., the cut lines being continuous - for example as seen on the left in Figure 4, or broken or interrupted.

Further, other weaknesses or stress raisers may be provided in the face sheets or septum layers 1 by means of dimples, as seen on the right in Figure 4, or folds and/or creases etc., and/or other discontinuities.

In summary it can be said the invention involves the introduction of lines or points or patterns of weakness into a containment system, entirely contrary to the expectation that the containment systems should be configured to be as strong as possible. This effectively brings the impactor catching mechanism inside the casing - rather than outside the casing as in traditional designs, such as Kevlar wrapped isogrid). The perforate or otherwise weakened face sheet or septum layer can then allow a clean entry of the released blade into the cellular layer below. Energy is removed by the crush and travel of the released blade within this cellular material.

Thus there is provided in accordance with embodiments of the invention a layered or laminate structure comprising: a face sheet or septum layer which is provided with zones of weakness, for example by means of perforations, cuts, interruptions, dimpling, tiling; one or more crushable sandwich layers; and a stiff backing layer. It has been found that such a structure actually withstands the oblique impact of a blade or blade fragment at impact velocity better than a similar layered structure where the top layer is not provided with zones of weakness, i.e. not perforated.

The inventor believes that this is because a blade impactor under normal operating conditions will typically have enough energy to puncture the face sheet or septum layer regardless of it having perforations or not. Further, the impactor will then tend to move laterally through the crushable layer or layers. The impactor is likely to be thicker than the crushable layer and so susceptible to be caught (and the provision of multiple layers increases the likelihood of catching the impactor). The face sheet with perforations will most likely tear as the upper part of the impactor moves across it - a face sheet without perforations will tend to drive the impactor into the containment structure and if the impactor is driven into the containment structure under the face sheet, it exerts more force onto the backing layer, and thus a thicker backing sheet is needed to resist full penetration of the containment structure.

The inventor believes that the containment structure of the present invention, with deliberately provided weakness in the face sheet or septum layer, would allow the first impacted layer(s) to flex more, reducing the trapped wedge effect of the impactor, thereby reducing the stresses at the back surface of the backing layer 3. The energy of flexing is dissipated first as vibration, then as heat and possibly as plastic deformation.

The containment system or casing construction in accordance with an embodiment of the present invention is less complicated (lower cost of manufacture), and the initial casing forging can be slimmer (because the sandwich layers 2 need not be so thick) and lighter (because the backing layer 3 need not be so thick), thus reducing the machining and material removed (and thereby providing more cost saving).

In embodiments of the present invention, dimples and creases in the face sheets or septum layers may be made by metal rolling using a textured roller - possibly as part of a forging process. Laser bending could be used for giving localised thick and thin regions, as well as creases or folds.

Laser cutting could be used to give the slotted perforations. Laser cutting and bending could be performed together.

Chemical etching could be used to provide perforations, holes or dimples or other surface contours Punching could also preferably be used.

Although the present invention may find primary application in containment systems for gas turbine engines, it may also find application in other impactor or impact containment systems, for example in vehicle bumper systems, in effect to provide double protection, for low and high energy impacts.

## Claims

1. An impactor containment system including a laminate material, the laminate material comprising a face sheet (1), a cellular filling providing a crushable layer (2) one side of which layer is arranged on the face sheet (1), and a stiff backing layer (3) arranged on other side of the crushable layer (2), wherein the face sheet (1) is provided with zones of weakness (1a).

2. An impactor containment system as claimed in claim 1, the laminate material further comprising a layer structure, arranged on the side of the face sheet (1) away from the crushable layer (2), the layer structure comprising a further cellular filling providing a further crushable layer (2) proximate the face sheet (1), and, arranged on the further crushable layer away from the face sheet (1), a further face sheet (1) also provided with zones of weakness (1a).

3. An impactor containment system as claimed in claim 2, further comprising one or more further such layer structures in stacked arrangement.

4. An impactor containment system as claimed in claim 1, 2 or 3, wherein zones of weakness provided in the or a face sheet (1) are provided by perforations (1a) in the face sheet concerned (1).

5. An impactor containment system as claimed in claim 1, 2 or 3, wherein zones of weakness provided in the or a face sheet (1) are constituted by cuts (1a) in the face sheet concerned (1).

6. An impactor containment system as claimed in claim 5, wherein the cuts in the face sheet concerned follow differently directed straight lines and/or follow curves such as ovals or geodesic curves.

7. An impactor containment system as claimed in claim 1, 2 or 3, wherein zones of weakness provided in the or a face sheet (1) are constituted by dimpling in the face sheet (1) concerned.

8. An impactor containment system as claimed in claim 7, wherein the dimpling provides folds or creases or other discontinuities in the face sheet concerned.

9. An impactor containment system as claimed in claim 1, 2 or 3, wherein zones of weakness provided in the or a face sheet (1) are constituted by tiling of the face sheet concerned (1).

10. A gas turbine engine comprising an impactor containment system as claimed in any preceding claim.

11. A gas turbine engine as claimed in claim 10, wherein at least in the case of the outer face sheet (1) of the laminate material some zones of weakness are directed along lines across the line of expected ice impact and some line up with the expected angle of blade impact in the event of blade break off.
